(19) Europäisches Patentamt
European Patent Office
Office européen des brevets

(11) **EP 0 578 059 B1**

(12) **EUROPEAN PATENT SPECIFICATION**

(45) Date of publication and mention
of the grant of the patent:
**30.07.2003 Bulletin 2003/31**

(51) Int Cl.[7]: **H04L 9/32**

(21) Application number: **93110069.7**

(22) Date of filing: **24.06.1993**

(54) **Method for executing number-theoretic cryptographic and/or error-correcting protocols**

Verfahren zur Ausführung von kryptographischen und/oder fehlerkorrigierenden Protokollen auf dem Gebiet der Zahlentheorie

Procédé d'exécution de protocoles cryptographiques basés sur la théorie des nombres et/ou la correction d'erreurs

(84) Designated Contracting States:
**DE ES FR GB IT**

(30) Priority: **30.06.1992 EP 92401869**

(43) Date of publication of application:
**12.01.1994 Bulletin 1994/02**

(73) Proprietor: **THOMSON multimedia
92648 Boulogne Cédex (FR)**

(72) Inventor: **Naccache, David
F-94700 Maisons-Alfort (FR)**

(74) Representative:
**Hartnack, Wolfgang, Dipl.-Ing. et al
Deutsche Thomson-Brandt GmbH
European Patent Operations
Karl-Wiechert-Allee 74
30625 Hannover (DE)**

(56) References cited:
- **COMPUTERS & SECURITY. INTERNATIONAL JOURNAL DEVOTED TO THE STUDY OF TECHNICAL AND FINANCIAL ASPECTS OF COMPUTER SECURITY vol. 10, no. 3, May 1991, AMSTERDAM NL pages 263 - 267 D. LAURICHESSE ET AL. 'OPTIMIZED IMPLEMENTATION OF RSA CRYPTOSYSTEM'**
- **LAURICHESSE D. ET AL: 'Optimized implementation of RSA Cryptosystem' COMPUTERS & SECURITY vol. 10, no. 3, March 1991, AMSTERDAM, NL, pages 263 - 267**

**Description**

The present invention relates to a method for executing number-theoretic cryptographic and/or error-correcting protocols.

Background

Montgomery's algorithm described in "Modular Multiplication without Trial Division", Mathematics of Computation, vol 44, pp 519-521, is a process for computing $A*B*2^{-|n|}$ modulo n in O(Log(n)) memory space (O: order).
In Fiat, Feige and Shamir, "Zero-Knowledge Proofs of Identity", Journal of Cryptology, vol 1, pp. 77-94, an authentication scheme (Fiat-Shamir) is described.
See also EP-A-0252499 and EP-A-0325238.

Invention

It is one object of the invention to disclose a method of constructing a Fiat-Shamir-like authentication scheme suitable for Montgomery environments without introducing any overhead in the number of modular multiplications requested for the execution of the normal protocol. This object is reached by the method disclosed in claim 1.
A very recent result described in Arazi, "Modular Multiplication is Equivalent in Complexity to a Standard Multiplication", Fortress U&T Internal Report (1992), Fortress U&T Information Safeguards, P.O. Box 1350, Beer-Sheva, IL-84110, Israel, establishes (in a constructive way) that $A*B*2^{-|n|}$ mod n can be computed with the same complexity (timewise and hardwarewise) as A*B (not mod n).
This theoretical reduction of the problem of modular multiplication, recently applied to the design of today's fastest hardware modular multiplier, is very important since it implies that the protocol presented hereafter can be executed in the same time as a Fiat-Shamir scheme where all modular multiplications are replaced by standard multiplications. The fact that no constants are to be precalculated beforehand and the small amount of RAM requested for software implementation of the new protocol makes it highly convenient for smart-card applications, e.g. in pay TV systems. The advantage of the new method over the classical Fiat-Shamir protocol is that computations are done in a much quicker way. Also, the same philosophy can be applied in order to transform or adapt other number-theoretic schemes for quick execution.
All along this application, |n| denotes the length of n (in bits) and ‖n‖ the Hamming weight of n.
In Montgomery's algorithm for modular multiplication mentioned above it is assumed that n is odd. No other restrictions are imposed on the modulus.
Very much simplified, this algorithm 'Kernel' works as follows:
Let X[i] denote X's $i^{th}$ bit (with X[0] as LSB) and $K = 4^{|n|}$ mod n.

```
Kernel(A, B)
{
c = 0
For i = 0 to |n|-1
   If A[i] == 1 then c = c + B
   If c[i] == 1 then c = c + n
   c = c/2
If c ≥ n then c = c - n
Return(c)
}
```

It can be shown from the Montgomery reference cited above that $c = A*B*2^{-|n|}$ mod n and that:
Kernel(K, Kernel(A, B)) = A*B mod n.
A more comprehensive and complete approach is presented by Arazi mentioned above, where it is formally shown how to reduce the complexity of the computation Kernel(A, B) into that of A*B.

If it is possible to transform the Fiat-Shamir scheme in such a way that the Montgomery parasites $(2^{-|n|})$ will not disturb the protocol (using only one Kernel operation instead of each modular multiplication), then it would be possible to perform the Fiat-Shamir scheme in about the half of the time requested with a full Montgomery multiplier. Moreover, the precalculation or usage of the constant K of the Montgomery method is not required.

This approach to the problem is somewhat new since by opposition to the classical process of designing computational tools for comfortable execution of number-theoretic protocols, here a cryptographic scheme is transformed in order to meet a given computational limitation.

Advantageously after a proper modification of the relation between the public and the secret keys the Montgomery parasites can be used helpful instead of being disturbing. From now on D will denote the parasite factor $2^{-|n|} \bmod n$ and it is assumed the availability of a half Montgomery multiplier (that is a Kernel procedure performing only the operation A*B*D mod n).

The Fiat-Shamir public $v_j$-s is redefined by: $D^3 * v_j * s_j^2 \equiv 1 \bmod n$ .

It is assumed that the $v_j$'s are already known to the verifier (for instance by Fiat and Shamir's F(ID/j) method).

Step 1:

A prover device picks a random number R and computes $Z = R^2 D \bmod n = Kernel(R, R)$ and sends it to a verifier device.

Step 2:

The verifier device sends the random binary vector e to the prover device.

Step 3:

The prover device computes and sends to the verifier device:

$$y = r \prod_{e_i=1} s_i D^{||e||} \bmod n.$$

This value is easily computed by:

$y = Kernel(s_{i1}, Kernel(s_{i2},...Kernel(s_{i||e||}, r))...)$.

Here the ij's denote the $||e||$ indices selected by vector e.

Step 4:

The verifier device computes (in a similar way to that of the previous step):

$$A = Kernel(v_{i1}, Kernel(v_{i2},...Kernel(v_{i||e||}, Kernel(y, y)))...)$$

$$= y^2 D \prod_{e_i=1} v_i D^{||e||-1} D \bmod n$$

$$= r^2 \prod_{e_i=1} v_i s_i^2 D^{2||e||} D^{||e||} D \bmod n .$$

$$= r^2 \prod_{e_i=1} v_j s_j^2 D^{3||e||} D \bmod n = r^2 D \bmod n$$

and tests if A = Z.

The prover device can be a smart card comprising a microprocessor and RAM means and storing in non-volatile memory means the secret keys $s_i$ and the modulus n, whereby the smart card is connected via a smart card reader to a pay TV decoder comprising the verifier device which evaluates the public key v and stores also the modulus n in memory means.

In principle the inventive method consists in computing number-theoretic cryptographic and/or error-correcting protocols using a prover device storing in memory means secret keys $s_i$ and a modulus n, and a verifier device which evaluates a set of public keys $v_i$, whereby the relation between the public keys $v_j$ and the secret keys $s_j$ is modified in such a way that parasites induced by the usage of a Montgomery-like modular multiplication method are met or cancelled.

More specifically, the relationship between the public keys and the secret keys is modified versus the relationship between said keys in the original protocols by introducing dependence on the Mont--gomery constant parasite factor in said relationship.

Advantageous additional embodiments of the inventive method are resulting from the respective dependent claims.

Preferred embodiments

Similarly, the invention can be applied to the Fiat-Shamir digital signature method as well.

In Quisquater and Guillou, "A Practical Zero-Knowledge Protocol Fitted to Security Microprocessor Minimizing Both Transmission and Memory", Proceedings of Eurocrypt'88 Lecture Notes in Computer Science, Springer-Verlag (Ed. C.G. Günther) 330 (1988), pp. 123-128, a second very popular authentication scheme is described. The original Quisquater-Guillou identification scheme is the following:

The basic relationship between the secret key B and a user's (prover device) identity ID is: $f(ID)*B^v = 1 \bmod n$. Another short name for $f(ID)$ is J. The parameter v is decided by the authority.

Step 1:

The prover device picks a random number r and sends his ID and $T = r^v \bmod n$ to the verifier device.

Step 2:

The verifier device picks a random d<v, computes J=f(ID) and sends d to the prover device.

Step 3:

The prover device computes and sends $U = r*B^d \bmod n$ to the verifier device.

Step 4:

The verifier device checks that $T = J^d U^v \bmod n$.

This identity should hold since:

$$J^d U^v = J^d (r*B^d)^v = (J*B^v)^d r^v = 1^d r^v = r^v = T \bmod n.$$

By applying the inventive method here the computation can be accelerated using a half Montgomery multiplier (processor). Again, the relationship between the public and the secret keys is modified: $f(ID)*B^v D^{v+1} = 1 \bmod n$, but exactly the same protocol is executed while replacing the multiplications by Kernel operations:

Step 1:

The prover device picks a random number r and sends his ID and $T = r^v D^{v-1} \bmod n$ to the verifier device. The factor $D^{v-1}$ is added by the classical square-and-multiply exponentiation algorithm where all multiplications are replaced by Kernel procedures. More precisely, this Kernel_Exponentiation algorithm is:

```
Kernel_Exponentiation(A, p)
{
Accuml = A
x = 1
While (p not equal 0)
    {
    Accuml = Kernel(Accuml, Accuml)
    If p[0] == 1 then x = Kernel(x, Accuml)
    ShiftToTheRight(p)
    }
Return(x)
}
```

Therefrom it can be easily proved that:

$$\text{Kernel\_Exponentiation}(A, p) = A^P D^{P-1} \text{ mod n (T is obtained by}$$

$$\text{Kernel\_Exponentiation}(r, v)).$$

Step 2:

The verifier device picks a random d<v, computes J=f(ID) and sends d to the prover device.

Step 3:

The prover device computes and sends $U = r*B^d D^d$ mod n to the verifier device.
U is computed by: Kernel(Kernel_Exponentiation(B, d), r)

Step 4:

The verifier device checks that $T = J^d U^v D^{d+v-1}$ mod n.
The value $J^d U^v D^{d+v-1}$ is computed by:
Kernel(Kernel_Exponentiation(J, d), Kernel_Exponentiation(U, v))
This test should be true since:

$$J^d U^v D^{d+v-1} = J^d (r*B^d D^d)^v D^{d+v-1} = (J*B^v)^d r^v D^{d*v+d+v-1} =$$

$$D^{-d(v+1)} r^v D^{d(v+1)} D^{v-1} = r^v D^{v-1} = T.$$

Schnorr, "Efficient Identification and Signatures for Smart Cards", Proceedings of Eurocrypt'89 Lecture Notes in Computer Science, Springer-Verlag (Ed. G. Brassard) 435 (1990), pp. 239-252, (see also EP-A-0384475) is a system where the relation between the public (v) and the secret (s) keys is $v = \alpha^{-s}$ mod p.
$\alpha$ is chosen by the authority in such a way that $\alpha^q = 1$ mod p. q is a public key published by the authority.

Step 1:

The prover device picks a random r, computes $x = \alpha^r$ mod p and sends x to the verifier device.

Step 2:

The verifier device picks a random e and sends it to the prover device.

Step 3:

The prover device sends back y = r+s*e mod q.

Step 4:

The verifier device tests that $x = \alpha^y v^e$ mod p.

The inventive method can be applied again in order to shorten the computation time. The only modification to introduce is in the relationship between the public and secret keys which becomes:

$$v * D^{s+1} \alpha^s = 1 \text{ mod } p.$$

Step 1:

The prover device picks a random r, computes x = $\alpha^r D^{r-1}$ mod p and sends x to the verifier device.

x = Kernel_Exponentiation($\alpha$, r)

Step 2:

The verifier device picks a random e and sends it to the prover device.

Step 3:

The prover device sends back y = r+s*e mod q

Step 4:

The verifier device checks that $x = \alpha^y v^e D^{y+e-1}$ mod p by testing that:

x = Kernel(Kernel_Exponentiation($\alpha$, y), Kernel_Exponentiation(v, e)).

This test should be true since:

$$\alpha^y v^e D^{y+e-1} = \alpha^{r+s*e} v^e D^{y+e-1} =$$

$$\alpha^{r+s*e} (\alpha^{-s} D^{-(1+s)})^e D^{y+e-1} =$$

$$\alpha^r D^{-(s+1)e} D^{r+s*e+e-1} = \alpha^r D^{r-1} = x.$$

The signature scheme disclosed in El Gamal, "A public-key cryptosystem and a signature scheme based on the discrete logarithm", IEEE Transactions on Information Theory, vol. 31, No. 4, pp. 469-472, 1985, is based on the discrete logarithm problem.

The public key is defined as an integer $p = g^s$ mod q, where s is the user's secret key and p, q and g are public. For signing a message m, the user picks a random number k, computes $u = g^k$ mod q and computes v such that m = s*u+k*v mod (q-1). {u, v} is the signature of message m.

Upon reception, the validity of the signature can be checked since $p^u u^v = g^{s*u} g^{k*v} = g^{s*u} g^{m-s*u} = g^m$ mod q and m and g are available.

In order to take advantage of the inventive Kernel_Exponentiation procedure without modifying the protocol, the public key is just redefined as $p = g^s D^{s-1}$ mod q.

p can be easily computed by Kernel_Exponentiation(g, s).

For signing, the user will pick a random k and compute $u = g^k D^{k-1} \bmod q = \text{Kernel\_Exponentiation}(g, k)$, whilst the definition of v remains the same (namely: $m = s*u+k*v \bmod (q-1)$). For checking the validity of the signature, the receiver will compute:

$$\text{Kernel}(\text{Kernel\_Exponentiation}(p, u), \text{Kernel\_Exponentiation}(u, v)) =$$

$$(p^u D^{u-1})(u^v D^{v-1})D = (p^u D^{u-1})(u^v D^v) = (p^u D^{u-1})(g^k D^{k-1})^v D^v =$$

$$(p^u D^{u-1})(g^k D^k)^v = (p^u D^{u-1})(g*D)^{k*v} = (p^u D^{u-1})(g*D)^{m-s*u} =$$

$$(g^s D^{s-1})^u D^{u-1} g^{m-s*u} D^{m-s*u} = g^{s*u} D^{s*u} D^{-u} D^{u-1} g^{m-s*u} D^{m-s*u} =$$

$$g^m D^{m-1} \bmod q$$

, and will naturally compare this value to the result of:

$\text{Kernel\_Exponentiation}(g, m)$.

The Digital Signature Standard (DSS) is an upraising new standard for message signature. Very much simplified, the DSS works as follows:

Two primes, p and q, and an integer g are selected. $y = g^x \bmod p$ is computed and p, q, g and y are published. x is the user's private key.

The procedure for signing the message M is the following:

The signer device hashes message M into a compressed string m.

The signer device computes $r = (g^k \bmod p) \bmod q$ and $s = (m+x*r)/k \bmod q$ and sends the signature {r, s} to the verifier device.

The verifier device will control the signature by checking that $((g^{m*sE(-1) \bmod q} y^{r*sE(-1) \bmod q}) \bmod p) \bmod q = r$, with $sE(-1) = s^{-1}$.

In order to adapt this process to the inventive method, only the relation between the keys is modified, but two different Kernel procedures will be distinguished:

$\text{Kernel}_q(A, B)$ computing $A*B*\vartheta \bmod q$ and

$\text{Kernel}_p(A, B)$ computing $A*B*D \bmod p$.

Here is the new protocol: Redefine $y = g^{\vartheta x} D^{\vartheta x-1} \bmod p$. The signer device computes:

$$r1 = \text{Kernel\_Exponentiation}_p(g, k) = g^k D^{k-1} \bmod p,$$

$$r = \text{Kernel}_q(r1, 1) = (g^k D^{k-1} \bmod p)\vartheta \bmod q \text{ and}$$

$$s = \text{Kernel}_q (1/k, (m + \text{Kernel}_q(x, r))) =$$

$$\vartheta(m+x*r*\vartheta)/k \bmod q$$

and sends the signature {r, s} to the verifier device.

The verifier device will control the signature by computing:

$$w = s^{-1} \bmod q$$

$$u1 = \text{Kernel}_q(m, w) = m \, w \, \vartheta \bmod q$$

$$u2 = \text{Kernel}_q(r, w) = r \, w \, \vartheta \bmod q$$

$$v1 = \text{Kernel\_Exponentiation}_p(g, u1) = g^{u1} D^{u1-1} \bmod p$$

$$v2 = \text{Kernel\_Exponentiation}_p(y, u2) = y^{u2}D^{u2-1} \bmod p$$

$$v3 = \text{Kernel}_p(v1, v2) = g^{u1}D^{u1-1}y^{u2}D^{u2-1}D \bmod p =$$

$$g^{u1}y^{u2}D^{u1+u2-1} \bmod p = g^{u1}(g^{\vartheta x}D^{\vartheta x-1})^{u2}D^{u1+u2-1} \bmod p = g^{mw\vartheta}g^{\vartheta xrw\vartheta}D^{\vartheta x(u2+u1-1)} \bmod p$$

$$= g^{w(m\vartheta+xr\vartheta\vartheta)}D^{\vartheta x(u2+u1-1)} \bmod p$$

$$= g^{k}D^{\vartheta x(u2+u1-1)} \bmod p = D^{\vartheta xrw\vartheta+mw\vartheta-1}g^{k} \bmod p = g^{k}D^{k-1} \bmod p$$

$$v = \text{Kernel}_q(v3, 1) = (g^{k}D^{k-1} \bmod p)\vartheta \bmod q$$

and will compare that: $v = r$.

For r the signer can also compute

$$r = (g^{k}D^{k-1} \bmod p)C*\vartheta \bmod q$$

with checking by the verifier device that $v3*\vartheta*C = r \bmod q$, where C is an arbitrary constant.

For r the signer can also compute

$$r = (g^{k}D^{k-1} \bmod p)*f(M)*\vartheta \bmod q$$

with checking by the verifier device that $v3*\vartheta*f(M) = r \bmod q$, where f(M) is a public function of the message to sign.

Advantageously with no extra cost (compared to the original DSS) the security of the proposed scheme can be improved since the steps:

$r = \text{Kernel}_q(r1, 1)$ (when computing the signature) and

$v = \text{Kernel}_q(v3, 1)$ (when verifying the signature) can be respectively replaced by:

$r = \text{Kernel}_q(r1, f(m))$ (when computing the signature) and

$v = \text{Kernel}_q(v3, f(m))$ (when verifying the signature),

where f denotes any public function (e.g. |q| LBS bits of m).

With a 68HC05 type microprocessor running at 3.5MHz the Kernel operation (for 512 bit numbers) was implemented in less than 135ms, RAM usage is less than 70 bytes. A special Kernel-Squaring version runs at 85ms but requires a double RAM space.

In the article of Arazi cited above it is shown that "It is possible to compute A*B*D mod n in |n|+1 clock cycles. That is, a modular multiplication is performed with the same complexity (timewise and hardwarewise) as that of a standard multiplication operation".

It is thus possible to execute a Fiat-Shamir identity check (and signature, with similar modifications of the scheme) in hardware and time equivalent to that required for the execution of the protocols without modular reductions.

The same strategy of modifying the relationship between public and secret keys in order to meet or cancel the effect of parasite constants introduced by modular reduction tools can be applied to a big variety of number-theoretic authentication and signature protocols.

The invention can also be used for banking, access control or military applications.

**Claims**

1.  Method for executing number-theoretic cryptographic and/or error-correcting protocols using a prover device - e. g. a smart card - storing in memory means secret key and a modulus, and a verifier device which evaluates public keys, **characterized in that** the relationship between the public keys ($v_j$) and the secret keys ($s_j$) is modified versus the relationship between said keys in said original protocols by introducing dependence on the Montgomery constant parasite factor in said relationship.

2.  Method according to claim 1, **characterized in that** by using a Fiat-Shamir protocol for digital signature and/or identification:

- replacing all the modular multiplication operations by a kernel operation taking as input a couple of numbers A and B and outputting the number A*B*D mod n,

where D is a constant parasite factor and n is a standard Fiat-Shamir modulus;

- replacing the relationship between the public and the secret keys by $D^3v_js_j^2 \equiv 1$ mod n.

3. Method according to claim 1, **characterized in that** by using a Quisquater-Guillou protocol for digital signature and/or identification:

- replacing all the modular multiplication operations by a kernel operation taking as input a couple of numbers A and B and outputting the number A*B*D mod n,

where D is a constant parasite factor and n is a Quisquater-Guillou modulus;

- replacing the relationship between the public and the secret keys by $f(ID)\ (B*D)^vD = 1$ mod n.

4. Method according to claim 1, **characterized in that** by using a Schnorr protocol for digital signature and/or identification:

- replacing all the modular multiplication operations by a kernel operation taking as input a couple of numbers A and B and outputting the number A*B*D mod n,

where D is a constant parasite factor and p is the standard Schnorr prime modulus;

- replacing the relationship between the public and the secret keys by $v*D^{s+1}\alpha^s = 1$ mod p.

5. Method according to claim 1, **characterized in that** by using on E1-Gamal protocol for digital signature and/or identification:

- replacing all the modular multiplication operations by a kernel operation taking as input a couple of numbers A and B and outputting the number A*B*D mod n, where D is a constant parasite factor and q is the standard El-Gamal prime modulus;
- replacing the relationship between the public and the secret keys by $g^sD^{s-1} = 1$ mod q;
- replacing the definition of u by $u = g^kD^{k-1}$ mod q.

6. Method according to claim 1, **characterized in that** by using a Digital Signature Standard:

   a) Hashing by the prover device a message M to sign into a compressed string m;
   b) Computing by the prover device $r = (g^kD^{k-1}$ mod p) mod q;
   c) Computing by the prover device $s = \vartheta(m+x*r*\vartheta)/k$ mod q;
   d) Sending from the prover device to the verifier device the signature {r ,s};
   e) Computing by the verifier device $w = s^{-1}$ mod q;
   f) Computing by the verifier device $u1 = m\ w\ \vartheta$ mod q;
   g) Computing by the verifier device $u2 = r\ w\ \vartheta$ mod q;
   h) Computing by the verifier device $v1 = g^{u1}D^{u1-1}$ mod p;
   i) Computing by the verifier device $v2 = y^{u2}D^{u2-1}$ mod p;
   j) Computing by the verifier device $v3 = v1*v2+D$ mod p;
   k) Checking by the verifier device that $v3 = r$ mod q.

7. Method according to claim 1, **characterized in that** by using a Digital Signature Standard:

   a) Hashing by the prover device a message M to sign into a compressed string m;
   b) Computing by the prover device $r = (g^kD^{k-1}$ mod p)$C*\vartheta$ mod q;
   c) Computing by the prover device $s = \vartheta(m+x*r*\vartheta)/k$ mod q;
   d) Sending from the prover device to the verifier device the signature {r ,s};

e) Computing by the verifier device w = s$^{-1}$ mod q;
f) Computing by the verifier device u1 = m w $\vartheta$ mod q;
g) Computing by the verifier device u2 = r w $\vartheta$ mod q;
h) Computing by the verifier device v1 = g$^{u1}$D$^{u1-1}$ mod p;
i) Computing by the verifier device v2 = y$^{u2}$D$^{u2-1}$ mod p;
j) Computing by the verifier device v3 = v1*v2+D mod p;
k) Checking by the verifier device that v3*$\vartheta$*C = r mod q, where C is an arbitrary constant.

**8.** Method according to claim 1, **characterized in that** by using a Digital Signature Standard:

a) Hashing by the prover device a message M to sign into a compressed string m;
b) Computing by the prover device r = (g$^k$D$^{k-1}$ mod p)*f(M)*$^\vartheta$ mod q;
c) Computing by the prover device s = $\vartheta$(m+x*r*$\vartheta$)/k mod q;
d) Sending from the prover device to the verifier device the signature {r ,s};
e) Computing by the verifier device w = s$^{-1}$ mod q;
f) Computing by the verifier device u1 = m w $\vartheta$ mod q;
g) Computing by the verifier device u2 = r w $\vartheta$ mod q;
h) Computing by the verifier device v1 = g$^{u1}$D$^{u1-1}$ mod p;
i) Computing by the verifier device v2 = y$^{u2}$D$^{u2-1}$ mod p;
j) Computing by the verifier device v3 = v1*v2+D mod p;
k) Checking by the verifier device that v3*$\vartheta$*f(M) = r mod q, where f(M) is a public function of the message to sign.

**9.** Method according to any of claims 1 to 8, **characterized in that** the operations x = y$^{power}$D$^{power-1}$ modulo N are done by an exponentiation procedure, the algorithmic structure of which is:
Accuml = y
x = 1

```
While (power not equal O)
      {
      Accuml = Kernel(Accuml, Accuml)
      If power[O] == 1 then x = Kernel(x, Accuml)
      ShiftToTheRight(power)
      }
Return(x)
```

**Patentansprüche**

**1.** Verfahren zur Ausführung von zahlentheoretischen, kryptographischen und/oder fehlerkorrgierenden Protokollen unter Anwendung einer Beweiseinheit - z.B. einer Smart Card -, die in Speichermitteln einen Geheimschlüssel und einen modulus speichern, und einer Prüfeinheit, die die öffentlichen Schlüssel auswertet,
**dadurch gekennzeichnet, dass**
der Zusammenhang zwischen den öffentlichen Schlüsseln (v$_j$) und den geheimen Schlüsseln (s$_j$) gegenüber dem Zusammenhang zwischen den Schlüsseln in den ursprünglichen Protokollen durch Einführung einer Abhängigkeit von dem konstanten Montgomery-Parasitenfaktor in dem Zusammenhang geändert wird.

**2.** Verfahren nach Anspruch 1, **dadurch gekennzeichnet, dass** durch Anwendung eines Flat-Shamir-Protokolls für die digitale Signatur und/oder die Identifikation folgendes erfolgt:

- Ersatz aller modularen Multiplikationsvorgänge durch eine Kernel-Operation, die als Eingang ein Paar von Zahlen A und B aufnimmt und die Zahl A*B*D mod n ausgibt, wobei D ein konstanter Parasitenfaktor und n ein genormter Fiat-Shamir-modulus ist,

- Ersatz des Zusammenhangs zwischen den öffentlichen und den geheimen Schlüsseln durch $D^3 v_j s_j^2 \equiv 1 \bmod n$.

3. Verfahren nach Anspruch 1, **dadurch gekennzeichnet, dass** durch Anwendung eines Quisquater-Guillou-Protokolls für die digitale Signatur und/oder die Identifikation folgendes erfolgt:

- Ersatz aller modularen Multiplikationsoperationen durch eine Kernel-Operation, die als Eingang ein Paar von Zahlen A und B aufnimmt und automatisch die Zahl A\*B\*D mod n ausgibt, wobei D ein konstanter Parasitenfaktor und n ein Quisquater-Guillou-modulus ist,
- Ersatz des Zusammenhangs zwischen den öffentlichen und den privaten Schlüsseln durch $f(ID)\,(B^*D)^v D = 1 \bmod n$.

4. Verfahren nach Anspruch 1, **dadurch gekennzeichnet, dass** durch Anwendung eines Schnorr-Protokolls für die digitale Signatur und/oder die Identifikation folgendes erfolgt:

- Ersatz aller modularen Multiplikationsoperationen durch eine Kernel-Operation, die als Eingang ein Paar von Zahlen A und B aufnimmt und die Zahl A\*B\*D mod n ausgibt, wobei D ein konstanter Parasitenfaktor und p der genormte Schnorr-prime modulus ist,
- Ersatz des Zusammenhangs zwischen den öffentlichen und den geheimen Schlüsseln durch $v^*D^{s+1}\alpha^s = 1 \bmod p$.

5. Verfahren nach Anspruch 1, **dadurch gekennzeichnet, dass** durch Anwendung eines EI-Gamal-Protokolls für die digitale Signatur und/oder die Identifikation folgendes erfolgt:

- Ersatz aller modularen Multiplikationsoperationen durch eine Kernel-Operation, die als Eingang ein Paar von Zahlen A und B aufnimmt und die Zahl A\*B\*D mod n ausgibt,

wobei D ein konstanter Parasitenfaktor und q der genormte EI-Gamal-prime modulus ist,

- Ersatz des Zusammenhangs zwischen den öffentlichen und den privaten Schlüsseln durch $g^s D^{s-1} = 1 \bmod q$,
- Ersatz der Definition von u durch $u = g^k D^{k-1} \bmod q$.

6. Verfahren nach Anspruch 1, **dadurch gekennzeichnet, dass** durch Anwendung eines Digital Signature Standard folgendes erfolgt:

a) Summierung (hashing) einer Nachricht M zur Signierung in eine komprimierte String m durch die Beweiseinheit,
b) Berechnung von $r = (g^k D^{k-1} \bmod p) \bmod q$ durch die Beweiseinheit,
c) Berechnung von $s = \delta (m+x^*r^*\delta)/k \bmod q$ durch die Beweiseinheit,
d) Senden der Signatur {r, s} von der Beweiseinheit zu der Prüfeinheit,
e) Berechnung von $w = s^{-1} \bmod q$ durch die Prüfeinheit,
f) Berechnung von $u1 = m\,w\,\delta \bmod q$ durch die Prüfeinheit,
g) Berechnung von $u2 = r\,w\,\delta \bmod q$ durch die Prüfeinheit,
h) Berechnung von $v1 = g^{u1} D^{u1-1} \bmod p$ durch die Prüfeinheit,
i) Berechnung von $v2 = y^{u2} D^{u2-1} \bmod p$ durch die Prüfeinheit,
j) Berechnung von $v3 = v1^*v2+D \bmod p$ durch die Prüfeinheit,
k) Prüfung durch die Prüfeinheit, ob $v3 = r \bmod q$ ist.

7. Verfahren nach Anspruch 1, **dadurch gekennzeichnet, dass** durch Anwendung eines Digital Signature Standard folgendes erfolgt:

a) Summierung (hashing) einer Nachricht M zur Signierung in eine komprimierte String m durch die Beweiseinheit,
b) Berechnung von $r = (g^k D^{k-1} \bmod p)\, C^*\delta \bmod q$ durch die Beweiseinheit,
c) Berechnung von $s = \delta (m+x^*r^*\delta)/k \bmod q$ durch die Beweiseinheit,
d) Senden der Signatur {r, s} von der Beweiseinheit zu der Prüfeinheit,
e) Berechnung von $w = s^{-1} \bmod q$ durch die Prüfeinheit,
f) Berechnung von $u1 = m\,w\,\delta \bmod q$ durch die Prüfeinheit,

g) Berechnung von u2 = r w $\delta$ mod q durch die Prüfeinheit,

h) Berechnung von v1 = $g^{u1}D^{u1-1}$ mod p durch die Prüfeinheit,

i) Berechnung von v2 = $y^{u2}D^{u2-1}$ mod p durch die Prüfeinheit,

j) Berechnung von v3 = v1*v2+D mod p durch die Prüfeinheit,

k) Prüfung durch die Prüfeinheit, ob v3*□*C = r mod q, wobei C eine willkürliche Konstante ist.

**8.** Verfahren nach Anspruch 1, **dadurch gekennzeichnet, dass** durch Anwendung eines Digital Signature Standard:

a) Summierung (hashing) einer Nachricht M zur Signierung in eine komprimierte String m durch die Beweiseinheit,

b) Berechnung von r = ($g^kD^{k-1}$ mod p) C*$\delta$ mod q durch die Beweiseinheit,

c) Berechnung von s = $\delta$ (m+x*r*$\delta$)/k mod q durch die Beweiseinheit,

d) Senden der Signatur {r, s} von der Beweiseinheit zu der Prüfeinheit,

e) Berechnung von w = $s^{-1}$ mod q durch die Prüfeinheit,

f) Berechnung von u1 = m w $\delta$ mod q durch die Prüfeinheit,

g) Berechnung von u2 = r w $\delta$ mod q durch die Prüfeinheit,

h) Berechnung von v1 = $g^{u1}D^{u1-1}$ mod p durch die Prüfeinheit,

i) Berechnung von v2 = $y^{u2}D^{u2-1}$ mod p durch die Prüfeinheit,

j) Berechnung von v3 = v1*v2+D mod p durch die Prüfeinheit,

k) Prüfung durch die Prüfeinheit, ob v3*□*C = r mod q,

wobei f(M) eine öffentliche Funktion der zu signierenden Nachricht ist.

**9.** Verfahren nach einem der Ansprüche 1 bis 8, **dadurch gekennzeichnet, dass** die Operationen x = $y^{power}D^{power-1}$ modulo N durch einen Exponentiations-Vorgang erfolgen, dessen algorithmische Struktur folgendermaßen ist:

Ausdruck 60

Accuml = y

x = 1

```
While (power not equal 0)
    {
    Accuml = Kernel(Accuml, Accuml)
    If power[0] == 1 then x = Kernel(x, Accuml)
    ShiftToTheRight(power)
    }
Return(x)
```

**Revendications**

**1.** Procédé pour exécuter des protocoles cryptographiques basés sur la théorie des nombres et/ou la correction d'erreurs utilisant un dispositif prouveur (par exemple, une carte à puce) qui stocke dans des moyens de mémorisation une clé secrète et un module, et un dispositif vérificateur qui évalue les clés publiques, **caractérisé en ce que** la relation entre les clés publiques ($v_j$) et les clés secrètes ($s_j$) est modifiée par rapport à la relation entre lesdites clés dans lesdits protocoles d'origine en introduisant une dépendance sur le facteur parasite constant de Montgomery dans ladite relation.

**2.** Procédé selon la revendication 1, **caractérisé** de la façon suivante en utilisant un protocole de Fiat-Shamir pour la signature numérique et/ou l'identification :

-    remplacement de toutes les opérations de multiplication modulaires par une opération de type noyau utilisant en entrée un couple de nombres A et B afin d'obtenir en sortie le nombre A*B*D mod n, où D est un facteur parasite constant et n, un module de Fiat-Shamir standard ;

- remplacement de la relation entre les clés publique et secrète par $D^3 v_j s_j^2 = 1 \bmod n$.

3. Procédé selon la revendication 1, **caractérisé** de la façon suivante en utilisant un protocole de Quisquater-Guillou pour la signature numérique et/ou l'identification :

   - remplacement de toutes les opérations de multiplication modulaires par une opération de type noyau utilisant en entrée un couple de nombres A et B et produisant en sortie le nombre $A*B*D \bmod n$, où D est un facteur parasite constant et n, un module de Quisquater-Guillou ;
   - remplacement de la relation entre les clés publique et secrète par $f(ID) (B*D)^v D = 1 \bmod n$.

4. Procédé selon la revendication 1, **caractérisé** de la façon suivante en utilisant un protocole de Schnorr pour la signature numérique et/ou l'identification :

   - remplacement de toutes les opérations de multiplication modulaires par une opération de type noyau utilisant en entrée un couple de nombres A et B et produisant en sortie le nombre $A*B*D \bmod n$, où D est un facteur parasite constant et p, le module premier Schnorr standard ;
   - remplacement de la relation entre les clés publique et secrète par $v*D^{s+1}\alpha^s = 1 \bmod p$.

5. Procédé selon la revendication 1, **caractérisé** de la façon suivante en utilisant un protocole d'El-Gamal pour la signature numérique et/ou l'identification :

   - remplacement de toutes les opérations de multiplication modulaires par une opération de type noyau utilisant en entrée un couple de nombres A et B et produisant en sortie le nombre $A*B*D \bmod n$, où D est un facteur parasite constant et q, le module premier d'El-Gamal standard ;
   - remplacement de la relation entre les clés publique et secrète par $g^s D^{s-1} = 1 \bmod q$ ;
   - remplacement de la définition de u par $u = g^k D^{k-1} \bmod q$.

6. Procédé selon la revendication 1, **caractérisé** de la façon suivante en utilisant un standard de signature numérique :

   a) hachage par le dispositif prouveur d'un message M afin d'effectuer une signature dans une chaîne compressée m ;
   b) calcul par le dispositif prouveur $r = (g^k D^{k-1} \bmod p) \bmod q$ ;
   c) calcul par le dispositif prouveur $s = (m+x*r*\vartheta)/k \bmod q$ ;
   d) envoi de la signature {r, s } du dispositif prouveur au dispositif vérificateur ;
   e) calcul par le dispositif vérificateur $w = s^{-1} \bmod q$ ,
   f) calcul par le dispositif vérificateur $u1 = m \, w \, \vartheta \bmod q$ ;
   g) calcul par le dispositif vérificateur $u2 = r \, w \, \vartheta \bmod q$ ;
   h) calcul par le dispositif vérificateur $v1 = g^{u1} D^{u1-1} \bmod p$ ;
   i) calcul par le dispositif vérificateur $v2 = y^{u2} D^{u2-1} \bmod p$ ;
   j) calcul par le dispositif vérificateur $v3 = v1*v2+D \bmod p$ ;
   k) vérification par le dispositif vérificateur que $v3 = r \bmod q$.

7. Procédé selon la revendication 1, **caractérisé** de la façon suivante en utilisant un standard de signature numérique :

   a) hachage par le dispositif prouveur d'un message M afin d'effectuer une signature dans une chaîne compressée m ;
   b) calcul par le dispositif prouveur $r = (g^k D^{k-1} \bmod p) \, C*\vartheta \bmod q$ ;
   c) calcul par le dispositif prouveur $s = (m+x*r*\vartheta)/k \bmod q$ ;
   d) envoi de la signature {r, s } du dispositif prouveur au dispositif vérificateur ;
   e) calcul par le dispositif vérificateur $w = s^{-1} \bmod q$ ,
   f) calcul par le dispositif vérificateur $u1 = m \, w \, \vartheta \bmod q$ ;
   g) calcul par le dispositif vérificateur $u2 = r \, w \, \vartheta \bmod q$ ;
   h) calcul par le dispositif vérificateur $v1 = g^{u1} D^{u1-1} \bmod p$ ;
   i) calcul par le dispositif vérificateur $v2 = y^{u2} D^{u2-1} \bmod p$ ;
   j) calcul par le dispositif vérificateur $v3 = v1*v2+D \bmod p$ ;
   k) vérification par le dispositif vérificateur que $v3*\vartheta*C = r \bmod q$, où C représente une constante arbitraire.

8. Procédé selon la revendication 1, **caractérisé** de la façon suivante en utilisant un standard de signature numérique :

a) hachage par le dispositif prouveur d'un message M afin d'effectuer une signature dans une chaîne compressée m ;

b) calcul par le dispositif prouveur $r = (g^k D^{k-1} \bmod p) f(M)*\vartheta \bmod q$ ;

c) calcul par le dispositif prouveur $s = (m+x*r*\vartheta)/k \bmod q$ ;

d) envoi de la signature { r, s } du dispositif prouveur au aisposilif vérificateur ;

e) calcul par le dispositif vérificateur $w = s^{-1} \bmod q$ ,

f) calcul par le dispositif vérificateur $u1 = m \, w \, \vartheta \bmod q$ ;

g) calcul par le dispositif vérificateur $u2 = r \, w \, \vartheta \bmod q$ ;

h) calcul par le dispositif vérificateur $v1 = g^{u1} D^{u1-1} \bmod p$ ;

i) calcul par le dispositif vérificateur $v2 = y^{u2} D^{u2-1} \bmod p$ ;

j) calcul par le dispositif vérificateur $v3 = v1*v2+D \bmod p$ ;

k) vérification par le dispositif vérificateur que $v3*\vartheta*f(M) = r \bmod q$, où f(M) représente une fonction publique du message à signer.

9. Procédé selon l'une des revendications 1 à 8, **caractérisé en ce que** les opérations $x = y^{puissance} D^{puissance-1}$ module N sont réalisées au moyen d'une procédure d'exponentiation, la structure algorithmique étant :

```
Accuml = y
X = 1

        Soit (puissance différente de 0)

            {
            Accuml = Noyau(Accuml, Accuml)
            Si puissance [0] == 1 alors x = Noyau(x, Accuml)
            DécalageVersLaDroite(p)
            }
        Retourne(x)
```